# EUROPEAN PATENT SPECIFICATION

(11) **EP 2 888 802 B1**
(45) Date of publication and mention of the grant of the patent: **02.11.2022**
(21) Application number: 13785625.8
(22) Date of filing: 27.08.2013
(51) Int. Cl.: H02K 3/28

(54) **STATOR WINDING OF A THREE-PHASE ALTERNATING CURRENT ELECTRIC MACHINE**
STATORWICKLUNG EINER ELEKTRISCHEN MASCHINE MIT DREIPHASEN-WECHSELSTROM
ENROULEMENT STATORIQUE DE MACHINE ÉLECTRIQUE TRIPHASÉE À COURANT ALTERNATIF

(30) Priority: 27.08.2012 RU 2012136476
(43) Date of publication of application: 01.07.2015
(73) Proprietor: Federal State Budgeted Education Institution for Higher Professional Education Perm National Research Polytechnic University, Perm 614990 (RU)
(72) Inventor: BELYAEV, Evgeniy Frolovich, Perm 614013 (RU); TCYLEV, Pavel Nikolaevich, Perm 614064 (RU); TASHKINOV, Anatoliy Aleksandrovich, Perm 614013 (RU)
(74) Representative: Gebauer, Dieter Edmund
(86) International application number: PCT/IB2013/058012
(87) International publication number: WO 2014/033623

(56) References cited:
- US-A- 2 905 840

## Description

The invention refers to the sphere of electrical engineering, in particular to stator windings of three-phase alternating current electrical machines and may be used for manufacturing of synchronous generators, synchronous and asynchronous motors.

The diagrams of single-wound concentric stator windings of three-phase alternating current electrical machines are known from V.I. Zimin, M.Ya. Kaplan etc. Windings of electrical machines. Fifth edition, revised: state energy publishing: Moscow - Leningrad 1961, P. 118-123.

These windings consist of three single phase windings whose axes are displaced in space relative to each other by 120 degrees. Each of the single phase windings along the double polar pitch of the stator is made by coils whose number is defined in accordance with the formula Z/2pm, where Z is the number of stator slots, 2p is the number of machine poles, m is the number of stator phases. The coils have different width but the same number of turns. The active sides of the coils along the polar pitch are located in the nearby Z/2pm slots and completely fill the whole volume of the slots.

The disadvantage of the three-phase single-wound concentric windings is the fact that they create a wide spectrum of high space excitation harmonics with significant values of their amplitudes along with the main harmonic of magnetomotive force (MMF) and magnetic flux. This disadvantage is explained by strongly pronounced staged nature of change of magnetomotive force along the stator bore. The action of high space excitation harmonics of magnetomotive force leads to the decrease of electromagnetic torque of electrical machines especially in the area of low rotor revolutions, the increase of differential reactance of stator windings, the increase of losses and heating temperature of active parts of electrical machines, vibration and noise.

Polyphase two-layer concentric winding is also known (SU 1690103 A1 Polyphase two-layer concentric winding (MΠK H02K17/14, H02K3/28; Patent holder: Lvov Polytechnical institute named after Lenin Komsomol; published on 07.11.1991)).

The disadvantage of this winding is the fact that its use is possible only in three-phase electrical machines with three-phase alternating current with the number of slots per pole and phase q > 3 what does not allow to use it for example in submersible motors for oil production industry which due to the small diameter of the stator are manufactured with the number of slots per pole and phase q = 2, rarely q = 3.

The diagram of the three-phase mush winding of stators of three-phase alternating current electrical machines is also known from A.I. Voldek. Electrical machines. Textbook for students of higher technical institutions. Second edition, revised and added. L., "Energiya", 1974, P.422, figure 21-15. The diagram of this winding is the most similar by its technical nature to the suggested winding and is further considered as the prototype.

The structure of the three-phase mush winding of stators of alternating current electrical machines consists of three single phase windings whose axes are displaced in space relative to each other by 120 degrees. All single phase windings of the stator are made by the same number of coils whose number along the double polar pitch of the stator is equal to Z/2pm. The coils that constitute the single phase windings have got the same shape and are designed with the same number of turns and the same diagram of their connection with each other. Along the polar pitch of the stator the active sides of the coils belonging to this single phase winding are placed in one layer in Z/2pm nearby slots completely filled by them.

The disadvantage of the three-phase mush windings is the fact that they create a wide spectrum of high space excitation harmonics with significant values of their amplitudes besides the main harmonic of magnetomotive force. This disadvantage is explained by strongly pronounced staged nature of distribution of magnetomotive force along the stator bore. It is especially true for electrical machines with a small number of stator slots. High space excitation harmonics of magnetomotive force lead to the decrease of electromagnetic torque of electrical machines, the increase of differential reactance of stator winding, the increase of losses and heating temperature of active parts, vibration and noise during operation. All these factors negatively influence operating characteristics of three-phase alternating current electrical machines.

Document US2905840 discloses a stator winding similar to the subject-matter of the claim. However, the pole number and the ratio of turn numbers of the first, second and third coil group differs from the subject-matter of the claim.

The task of the invention is creation of stator winding of three-phase alternating current electrical machines ensuring significant weakening of high space excitation harmonics of magnetic field, approximation of the distribution of magnetic field in machine gaps to sinusoidal distribution resulting in improvement of operating characteristics of electrical machines.

In order to solve the set task a stator winding of an alternating current electrical machine according to the claim is presented.

Further the invention is explained by the description of preferable options of implementation of the invention with references to accompanying drawings where:
- Fig.1: illustrates the diagram of the A-X phase of the three-phase stator winding in accordance with the invention;
- Fig.2: illustrates the diagram of the three-phase stator winding in accordance with the invention;
- Fig. 3: illustrates the diagram of harmonic composition of magnetomotive force of the three-phase stator winding in accordance with the invention;
- Fig. 4: illustrates the diagram of harmonic composition of magnetomotive force of the three-phase stator winding of submersible electric motor of 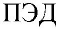 (submersible electric motor) series.

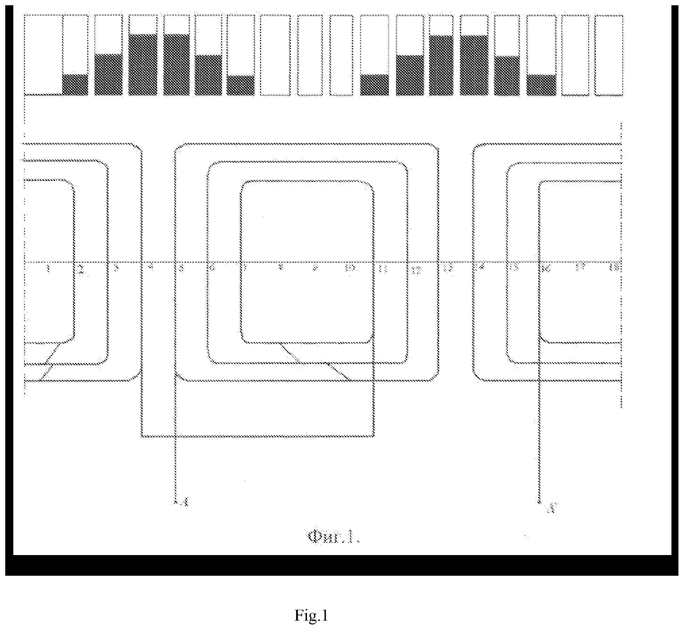

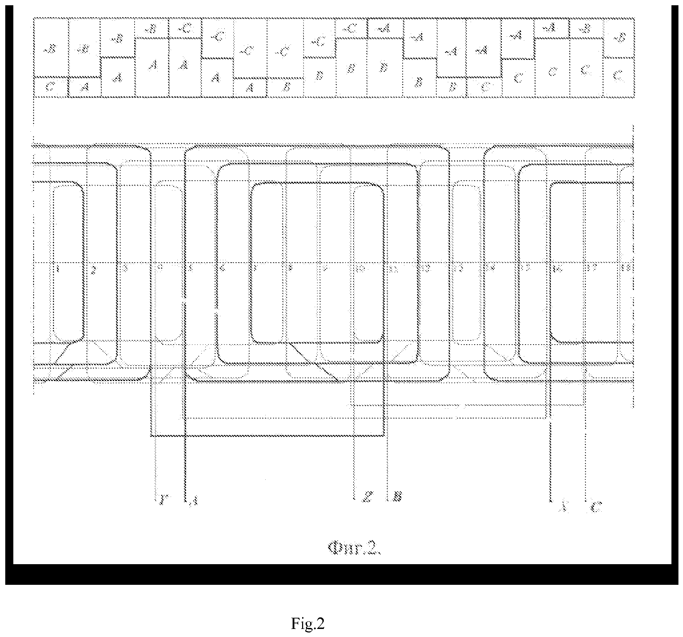

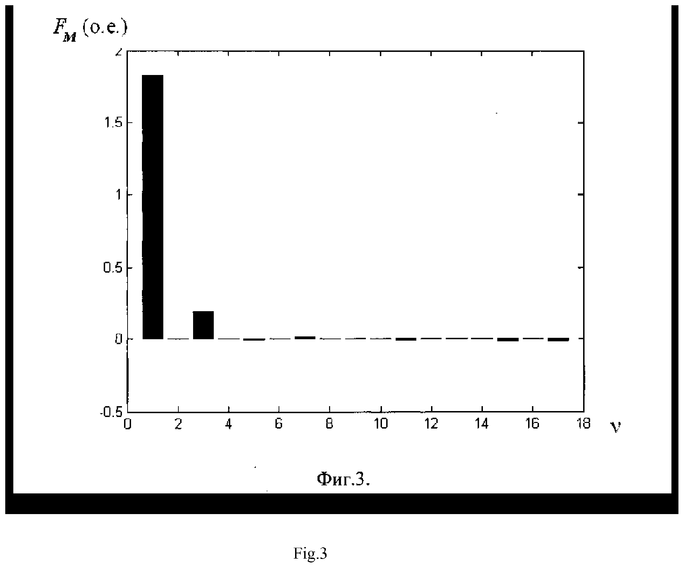

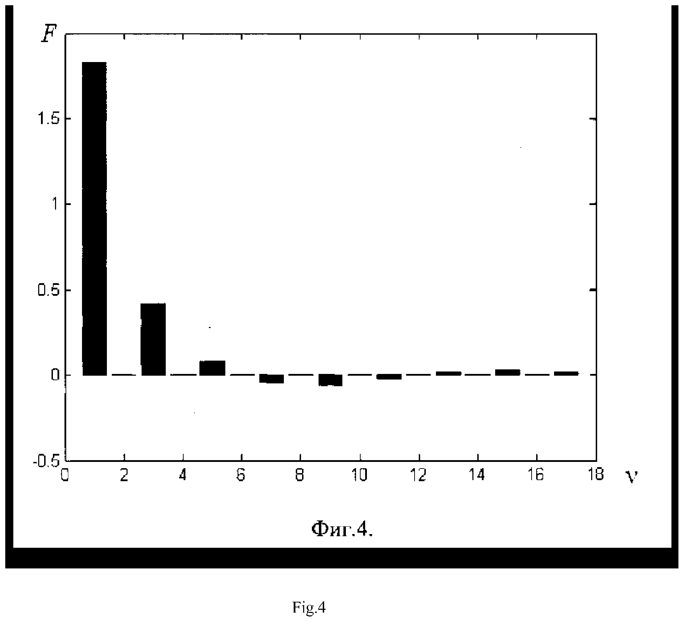

The diagram of the single phase A-X winding of the suggested three-phase stator winding (m=3) of electrical machine with the number of slots of the stator Z equal to 18, the number of poles 2p equal to 2 is depicted in Fig.1. Fig. 2 illustrates the diagram of the suggested three-phase winding. Fig. 3 contains the diagram that depicts harmonic composition of magnetomotive force of the stator with the suggested three-phase winding. At that Fig. 3 contains the ordinal number of the harmonics stated along the horizontal axis and the value of the amplitude of the magnetomotive force (in p.u.) created by the harmonics stated along the vertical axis. Fig. 4 contains for comparison the diagram of harmonic composition of magnetomotive force of the three-phase stator winding of the submersible electric motor of 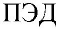 series used as the driver of the centrifugal pumps for lifting liquid from oil wells (Z=18, 2p=2, m=3, q=3, the volume of each slot is completely filled with one active side of the coil belonging to this or that single phase stator winding / Catalog of oil equipment, automation equipment, instruments and special materials. M.: VNIIOENG (All-Russian Research Institute for the Organization, Management and Economics of the Oil and Gas Industry), 1994, P.35)/.

The A-X single phase (Fig.1) contains six coils (2Z/2pm= 2·18/2·3=6) that from three groups (Z/2pm= 18/2·3=3) with two coils ((2Z/2pm)/(Z/2pm)=6/3=2) in each. The coils of one of the groups, let us call it the first one, have got minimal width that is equal to four tooth pitches of the stator (q+l=((Z/2pm)+l)=3+l). The coils of the second group have got a width of six tooth pitches, what is two tooth pitches more that the width of the coils of the first group. The coils of the third group have got the maximal width that is two tooth pitches more than the width of the coils of the second group and makes up eight tooth pitches. The number of turns in the coils of the first group is minimal and equals to W_{φ} / 12 (W_{φ} / 2 ·Σ³ _{*i*=1} *i).* The number of turns in the coils of the second group is equal to W_{φ} / 6 (W_{φ} / 12 + W_{φ} / 2 ·Σ³ _{*i*=1} *i).* The coils of the third group have got the maximum number of turns W_{φ} / 4 (W_{φ} / 6 + W_{φ} / 2 ·Σ³ _{*i*=1} *i).*

The coils with the maximum number of turns that constitute the third group are laid with their active sides in slots 5, 13 and 14, 4. The active sides of the coils of the second group are placed in slots 6, 12 and 15, 3 and the coils of the first group are laid with their active sides in slots 7, 11 and 16, 2. One coil belonging to different groups is laid along the polar pitch concentrically relative to the others. In such a way the coils of the first group are placed inside the coils of the second group that are themselves placed inside the coils of the third group. Though the coils of one and the same group located in neighboring polar pitches are laid in mush manner. The active sides of all coils of A-X single phase winding are placed in one layer in stator slots, occupying a different part of their volume. The slots that are least filled are the ones in which the coils of the first group are placed, a larger part of the volume of the slots is occupied by the coils of the second group, and the slots with the coils of the third group are the most filled.

Single phase windings B-Y and C-Z (Fig.2) are formed in accordance with the same principle as that of the A-X single phase winding. Laying of the coils of single phase windings B-Y and C-Z in stator slots should be performed in such a way that the displacement of the axes of these windings could be achieved in relation to the axis of the A-X single phase winding by 120 and 240 degrees accordingly. The implementation of this condition leads to the fact that each stator slot contains active sides of the coils of two single phase windings (the upper part, Fig.2). In relation to the considered stator with the claimed winding one of the two following combinations of distribution of active sides of the coils in the slots is achieved: the active side of the coil of the single phase winding with the largest number of turns and the active side of the coil of the single phase winding with the minimal number of turns; the active sides of the coils of the two phases with equal number of turns. In both of the above mentioned cases the equality of the number of turns is ensured per slots provided all the slots are filled. This principle also remains true for electrical machines with other quantity of stator slots. The difference shall only consist in the number of possible combinations.

The circuit diagram of connection of the coils of the A-X single phase winding is shown in Fig. 1. This diagram ensures similar direction of current in conductors of the active sides of the coils located in slots 2÷7, and similar but reverse direction of current in conductors of the active sides of the coils located in slots 11÷16. The circuit diagrams of connection of the coils forming single phase windings B-Y and C-Z repeat the diagram of connection of the coils of the A-X single phase winding (Fig.2).

The data on harmonic composition of magnetomotive force and the values of amplitudes of the series of harmonics for the stator with the suggested winding and the stator of the submersible electric motor of series 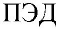 is stated in tables 1 and 2. These data is used for making the diagrams (Fig.3, Fig.4), that illustrate the spectra of high space excitation harmonics of magnetomotive forces created by the windings of the stators and the values of amplitudes of separate harmonics. The comparison of the tabular data and their graphic representation in the form of diagrams shows that the suggested winding ensures reduction of the amplitude of the third harmonics by 2,13 times, the amplitude of the fifth harmonics by 8,38 times, the and amplitude of the seventh harmonics by 3,5 times.

**Table 1**

| Harmonic composition of magnetomotive force of the stator with the suggested three-phase winding | | | | | | | | |
|---|---|---|---|---|---|---|---|---|
| The number of the harmonics | 1 | 3 | 5 | 7 | 9 | 11 | 13 | 15 |
| The amplitude of the harmonics | 1.8284 | 0.1940 | -0.0094 | 0.0120 | -0.0000 | -0.0059 | 0.0020 | -0.0139 |

**Table 2**

| Harmonic composition of magnetomotive force of the three-phase winding of the stator of submersible electric motor of series | | | | | | | | |
|---|---|---|---|---|---|---|---|---|
| The number of the harmonics | 1 | 3 | 5 | 7 | 9 | 11 | 13 | 15 |
| The amplitude of the harmonics | 1.8284 | 0.4147 | 0.0778 | -0.0422 | -0.0556 | -0.0207 | 0.0169 | 0.0298 |

The significant weakening of high space excitation harmonics of magnetomotive forces and magnetic field allows to increase the electromagnetic torque of electrical machines especially in the area of low rotor revolutions, to decrease losses and heating temperature of electrical machines, to decrease vibration and noise arising during operation of the electrical machines, to reduce differential reactance of the stator. A significant advantage of the suggested winding is the fact that it may be made in mush manner with odd number of slots per pole and phase of the stator, what cannot be achieved by means of the known diagrams of windings. The implementation of the diagrams of mush stator windings leads to reduction of the length of the coil ends, saving of active materials and further reduction of energy losses.

The suggested invention is designed for use by the companies of electrical engineering industry for mass production of three-phase alternating current electrical machines especially of electrical machines with a small number of slots per pole and phase, for example in asynchronous electric motors of submersible centrifugal pumps, the stator diameter of which is limited by the sizes of the tubes of the casing string. The use of the claimed invention in electrical machines for medical equipment that require low level of noise during operation etc. is very promising.

The invention is defined by the appended claim.

## Claims

1. A stator winding of an alternating current electrical machine contains two poles, three single phase windings and 3 slots per pole and phase, made up by an equal quantity of coils located in slots and connected with each other so as to obtain a spatial shift of the axes of the windings relative to each other by 120 degrees, wherein each of the single phase windings is made by 6 coils that contain 3 groups with 2 coils in each group, wherein each coil group is made with a different width of the coils it consists of and with a different number of turns that constitute the coils as compared with the other groups of the coils, wherein the coils of the first group are made with a minimal width that is equal to 4 tooth pitches of the stator and has a minimal number of turns as given by W_{φ} / 12 and are placed in slots located symmetrically relative to the axes of the poles, wherein the width of the second group is equal to 6 tooth pitches and the number of turns of the coils of the second group is given by W_{φ} / 6, and wherein the width of the third group is equal to 8 tooth pitches and the number of turns of the coils of the third group is given by W_{φ} / 4 , where W_{φ} is the number of turns of the single phase winding, wherein the coils of the second and third groups are located concentrically relative to the coils of the first group, and wherein the part of the volume of the slots that is free after laying of the coils of one single phase winding are used for placement of the coils of the two other single phase windings.

## Patentansprüche

1. Eine Statorwicklung einer elektrischen Wechselstrommaschine enthält zwei Pole, drei einphasige Wicklungen und 3 Nuten pro Pol und Phase, besteht aus einer gleichen Anzahl von Spulen, die in Nuten angeordnet und miteinander verbunden sind, um eine räumliche Verschiebung der Achsen der Wicklungen relativ zueinander um 120 Grad zu erhalten, wobei jede der einphasigen Wicklungen aus 6 Spulen besteht, die 3 Gruppen mit 2 Spulen in jeder Gruppe enthalten, wobei jede Spulengruppe mit einer unterschiedlichen Breite der Spulen, aus denen sie besteht, und mit einer unterschiedlichen Anzahl von Windungen, die die Spulen bilden, im Vergleich zu den anderen Spulengruppen hergestellt ist, wobei die Spulen der ersten Gruppe mit einer minimalen Breite hergestellt sind, die gleich 4 Zahnteilungen des Stators ist, und eine minimale Anzahl von Windungen haben, die durch Wφ / 12 gegeben ist, und in Nuten angeordnet sind, die symmetrisch relativ zu den Achsen der Pole angeordnet sind, wobei die Breite der zweiten Gruppe gleich 6 Zahnteilungen ist und die Anzahl der Windungen der Spulen der zweiten Gruppe durch Wφ / 6 gegeben ist, und wobei die Breite der dritten Gruppe gleich 8 Zahnteilungen ist und die Anzahl der Windungen der Spulen der dritten Gruppe durch Wφ / 4 gegeben ist, wobei Wφ die Anzahl der Windungen der Einphasenwicklung ist, wobei die Spulen der zweiten und dritten Gruppe konzentrisch zu den Spulen der ersten Gruppe angeordnet sind, und wobei der Teil des Volumens der Nuten, der nach dem Legen der Spulen einer einphasigen Wicklung frei ist, für die Anordnung der Spulen der beiden anderen einphasigen Wicklungen verwendet wird.

## Revendications

1. Un enroulement de stator d'une machine électrique à courant alternatif contient deux pôles, trois enroulements monophasés et 3 encoches par pôle et par phase, est constitué d'une quantité égale de bobines situées dans des encoches et connectées les unes aux autres de manière à obtenir un décalage spatial des axes des enroulements les uns par rapport aux autres de 120 degrés, dans lequel chacun des enroulements monophasés est constitué de 6 bobines qui contiennent 3 groupes avec 2 bobines dans chaque groupe, dans lequel chaque groupe de bobines est fait avec une largeur différente des bobines qu'il comprend et avec un nombre différent de tours qui constituent les bobines par rapport aux autres groupes de bobines, dans lequel les bobines du premier groupe sont faites avec une largeur minimale qui est égale à 4 pas de dents du stator et a un nombre minimal de tours donné par Wφ / 12 et sont placées dans des fentes situées symétriquement par rapport aux axes des pôles, dans lequel la largeur du deuxième groupe est égale à 6 pas de dents et le nombre de tours des bobines du deuxième groupe est donné par Wφ / 6, et dans lequel la largeur du troisième groupe est égale à 8 pas de dents et le nombre de tours des bobines du troisième groupe est donné par Wφ / 4, où Wφ est le nombre de tours de l'enroulement monophasé, dans lequel les bobines des deuxième et troisième groupes sont situées de manière concentrique par rapport aux bobines du premier groupe, et dans lequel la partie du volume des fentes qui est libre après la pose des bobines d'un enroulement monophasé est utilisée pour placer les bobines des deux autres enroulements monophasés.
